# EUROPÄISCHE PATENTANMELDUNG

(11) **EP 0 606 578 A1**
(43) Veröffentlichungstag der Anmeldung: **20.07.1994**
(21) Anmeldenummer: 93119480.7
(22) Anmeldetag: 03.12.1993
(51) Int. Cl.: F01M 1/10, B04B 5/00, B01D 36/04

(54) **Schmierölkreislauf einer Brennkraftmaschine**

(30) Priorität: 14.01.1993 DE 4300731; 20.02.1993 DE 4305311
(71) Anmelder: AUDI AG, D-85045 Ingolstadt (DE)
(72) Erfinder: Huber, Karl, Dr., D-85072 Eichstätt (DE)

(57) **Zusammenfassung**

Die Erfindung betrifft einen Schmierölkreislauf einer Brennkraftmaschine, mit einer aus einem Sumpf förderden Pumpe, die ein Schmierstellen versorgendes Hauptstromsystem und ein Nebenstromsystem mit unter Druck stehendem Schmieröl versorgt, wobei im Hauptstrom und im Nebenstrom ein Schmierölfilter vorgesehen ist. Zur Erzielung einer kostengünstigen, besonders wirksamen und eine lange Standzeit aufweisenden Filterung und Reinigung des Schmieröles ist im Nebenstrom eine Zentrifuge und im Hauptstrom ein Spalt-, Sinter- oder Siebfilter angeordnet. Ferner ist eine elektrische Funktionsüberwachung der Zentrifuge vorgesehen.

## Beschreibung

Die Erfindung betrifft einen Schmierölkreislauf einer Brennkraftmaschine gemäß dem Oberbegriff des Patentanspruches 1.

Einen gattungsgemäßen Schmierölkreislauf zeigt die DE 37 42 455 A1, bei der zur Filterung des Schmieröls ein Filter sowohl im Hauptstrom als auch im Nebenstrom vorgesehen ist. Mit einer solchen Anordnung soll der Strömungswiderstand im Schmierölhauptstrom (kleinerer Filter) vermindert und damit eine bessere Versorgung der druckölgeschmierten Lager sichergestellt werden.

Aufgabe der vorliegenden Erfindung ist es, einen kostengünstigen Schmierölkreislauf anzugeben, der neben einer ausgezeichneten Reinigung des Schmieröls eine lange Standzeit für Filter und Schmieröl ergibt.

Diese Aufgabe wird erfindungsgemäß mit den kennzeichnenden Merkmalen des Patentanpsruches 1 gelöst. Vorteilhafte Weiterbildungen der Erfindung sind den weiteren Patentansprüchen entnehmbar.

Die vorgeschlagene Kombination von Zentrifuge im Nebenstrom und Spalt-, Sinter- oder Siebfilter im Hauptstrom hat sich als besonders vorteilhaft über die gesamte Anforderungsmatrix erwiesen. So zeigte sich nach einer extrem langen Laufzeit das Schmieröl in einem guten Zustand hinsichtlich des Reinigungsgrades und der Schmiereigenschaften. Der Strömungswiderstand des Schmierölkreislaufes stieg nicht nennenswert an, was maßgeblich auf die Schmutzkapazität der Zentrifuge zurückzuführen ist. Bauliche Vorteile ergeben sich vor allem durch die einfache Anordnung insbesondere bei Verwendung eines Siebfilters.

Die angeführte Kombination ermöglicht somit den Betrieb einer Brennkraftmaschine über eine lange Laufzeit ohne Wechsel des Schmieröles und/oder der Filter, wobei insbesondere eine integrierte Bauweise von Zentrifuge und Siebfilter auch noch Kostenvorteile ergibt.

In vorteilhafter Weiterbildung der Erfindung ist der Siebfilter unmittelbar auf der Druckseite der Pumpe dem Haupt- und Nebenstrom vorgeschaltet angeordnet, so daß grobe Schmutzpartikel vorab abgeschieden werden, während mit der Zentrifuge Verbrennungsrückstände und feiner Abrieb aus dem Schmieröl separiert werden.

Das in dem Schmierölkreislauf vorgesehene Überdruckventil ist bevorzugt so im Hauptstrom angeordnet, daß dessen Druckregulierung unabhängig von Änderungen des Durchströmwiderstandes des Filtes wirkt und eine zuverlässige Versorgung der Schmierstellen und des hydraulischen Antriebes der Zentrifuge sicherstellt.

Ferner sorgt ein Überdruckventil stromauf der Zentrifuge im Nebenstrom dafür, daß z. B. im Leerlauf der Brennkraftmaschine vorrangig die Schmierstellen mit Öl versorgt werden.

In Weiterbildung der Erfindung wird vorgeschlagen, die Düsen der Freistrahl-Zentrifuge derart schräg anzustellen, daß sie an der Trommel neben dem in der Drehebene wirkenden Antriebsmoment eine axiale Kraftkomponente bewirken und daß diese Kraftkomponente zu einer Funktionsüberwachung genutzt wird. Die Trommel kann beispielsweise gegen einen federnd vorgespannten Kontakt anlaufen und diesen auf Grund der axialen Kraftkomponente zur Schließung eines Überwachungs-Stromkreises entsprechend betätigen.

Bevorzugt kann die Trommel dabei axial verschiebbar gelagert sein und in der Ruhestellung durch Gewichts- und/oder Federkraft in einer der Kraftkomponente entgegengerichteten Axialstellung gehalten werden, wobei eine Verschiebung der Trommel in die andere Axialstellung elektrisch ausgewertet wird.

Herstellungstechnisch und baulich besonders günstig kann der elektrische Kontakt durch eine an der Befestigungsschraube für das äußere Gehäuse der Zentrifuge befestigte Kontaktscheibe gebildet sein, die als Anlauffläche im Bereich der drehbaren Lagerung der Trommel vorgesehen ist. Daraus relustiert sowohl ein einfacher elektrischer Anschluß für die Überwachungsschaltung als auch eine einfache Montage der Zentrifuge.

Ein Ausführungsbeispiel der Erfindung ist im folgendem mit weiteren Einzelheiten näher beschrieben. Die schematische Zeichnung zeigt in
- Fig. 1: ein Blockschaltbild eines Schmierölkreislaufes einer Brennkraftmaschine mit einer Zentrifuge und einem Siegfilter;
- Fig. 2: einen Längsschnitt entlang der Drehachse der Trommel einer Freistrahl-Zentrifuge mit einer Vorrichtung zur Überwachung deren Funktion;
- Fig. 3: einen Schnitt gemäß Linie II-II der Fig. 1 durch eine der Düsen; und
- Fig. 4: ein Blockschaltbild der elektrischen Überwachungsschaltung.

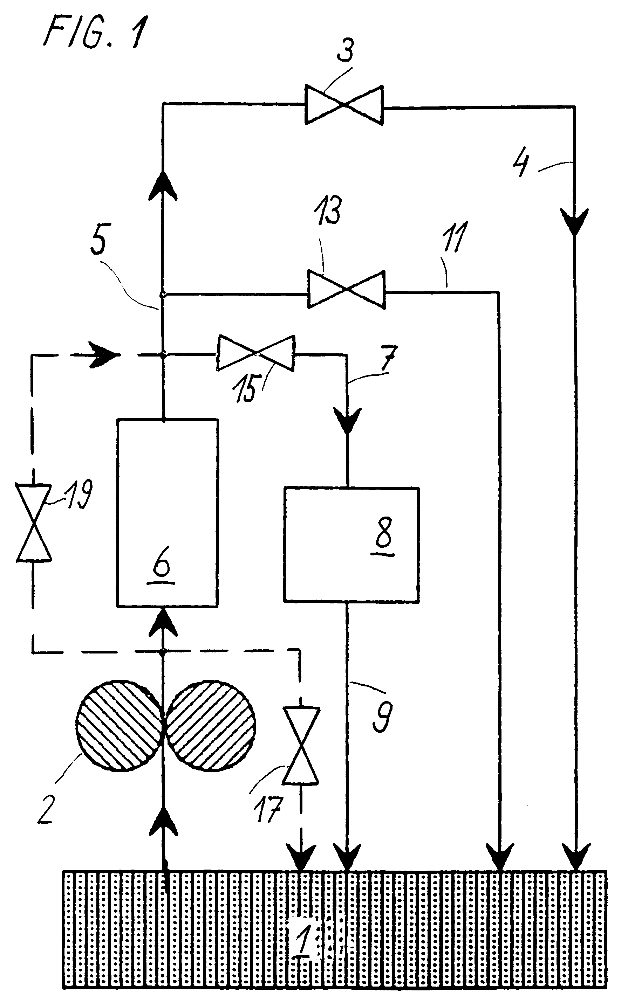

Der in Fig. 1 gezeigte Schmierölkreislauf einer nicht dargestellten Hubkolben-Brennkraftmaschine weist einen Schmieröl-Sumpf 1 auf, aus dem eine Zahnrad-Pumpe 2 in herkömmlicher Weise Schmieröl ansaugt und dieses unter Druck zu den Schmierstellen 3 (z. B. Kurbelwellen- und Nockenwellenlager) fördert. Aus diesen Lagern kann das Schmieröl wieder drucklos zum Sumpf zurückfließen (angedeutet mit der Rücklaufleitung 4).

In die von der Pumpe 2 abgehende Druckleitung 5 ist ein Siebfilter 6 mit einer Maschenweite von 30 µm eingeschaltet. Der Siebfilter 6, bevorzugt aus Metall hergestellt, kann wie ein Strumpf ausgeführt und wie an sich bekannt in die Druckleitung 5 integriert sein.

Stromab des Siebfilters 6 zweigt von der Druckleitung 5 eine erste Leitung 7 ab, die als Teil des Nebenstromsystems des Schmierölkreislaufes zu einer z. B. in der Ölwanne der Brennkraftmaschine oder außerhalb dieser liegenden Zentrifuge 8 führt. Von der Zentrifuge 8 kann das Schmieröl über die Rücklaufleitung 9 wieder in den Schmierölsumpf 1 zurückfließen.

Ferner ist stromab des Siebfilters 6 an der Druckleitung 5 eine weitere Leitung 11 angeschlssen, in die ein Überdruckventil 13 eingeschaltet ist und über die überschüssiges Schmieröl in den Schmierölsumpf 1 abgeleitet wird.

Das im Hauptstrom umlaufende Schmieröl wird demgemäß über die Druckleitung 5 durch das Siebfilter 6 hindurch zu den Schmierstellen 3 der Brennkraftmaschine gefördert, wobei ggf. überschüssiges Schmieröl über das Überdruckventil 13 abströmt. Grobe Schmutzpartikel werden dabei vom dem Siebfilter 6 zurückgehalten.

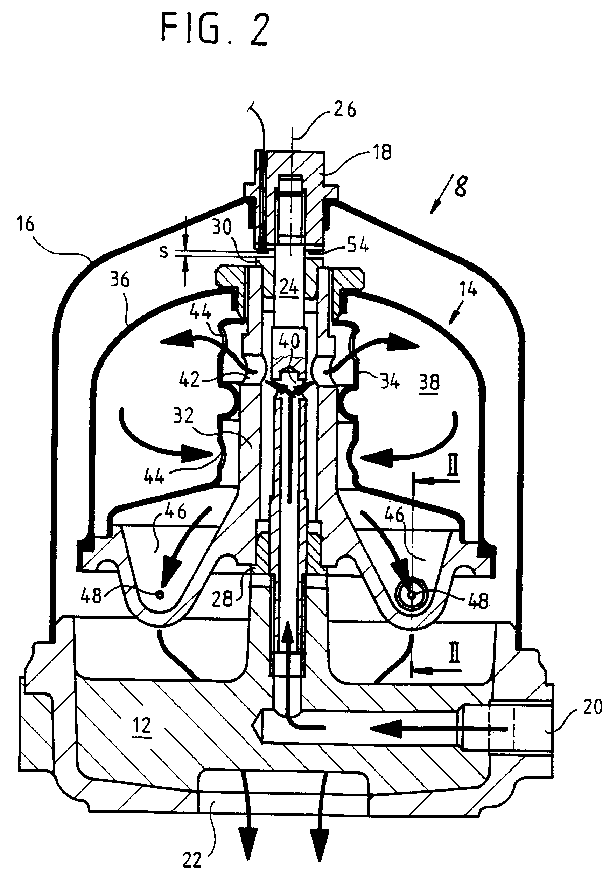

Gleichzeitig wird im Nebenstrom über die Zentrifuge 8 ständig das Schmieröl gereinigt bzw. werden Verbrennungsrückstände und feiner Abrieb aus dem Schmieröl ausgeschieden. Der Antrieb der Zentrifuge 8 erfolgt in an sich bekannter Weise nach dem Rückstoßprinzip über an der drehbaren Trommel der Zentrifuge 8 angeordnete Reaktionsdüsen (Fig. 2), an denen das unter Druck stehende Schmieröl austritt (z. B. Zentrifuge unter der Handelsbezeichnung GF 025 der Firma Glacier).

Stromauf der Zentrifuge 8 ist in die Leitung 7 ein Überdruckventil 15 eingeschaltet, welches bei einem niedrigerem Druck als dem des Überdruckventiles 13 öffnet, so daß das gesamte von der Pumpe 2 geförderte Schmieröl unterhalb der eingestellten Druckschwelle über die Schmierstellen 3 geführt wird. Damit ist eine sichere Schmierung auch bei niedrigem Druckniveau (z. B. im Leerlauf bei hohen Schmieröltemperaturen) gewährleistet.

Die Fig. 2 zeigt die Freistrahl-Zentrifuge 8, die sich im wesentlichen zusammensetzt aus einem unteren Sockelteil 12, einer drehbaren Trommel 14 und einem tassenförmigen Deckel 16, der durch eine Befestigungsschraube 18 an dem Sockel 12 gehalten ist.

Der Sockel 12 ist in nicht dargestellter Weise an der Brennkraftmaschine befestigt und weist einen Zulauf 20 für unter Druck stehendes Schmieröl aus dem Schmierölsystem der Brennkraftmaschine und einen in den Ölsumpf der Brennkraftmaschine zurückführenden Ablauf 22 auf. In den Sockel eingeschraubt ist eine teilweise hohle Achse 24, auf der über metallische Lagerbüchsen 28,30 der Nabenteil 32 der Trommel 14 drehbar gelagert ist. Die Trommel 14 kann sich somit um die Drehachse 26 frei drehen. Die Trommel 14 trägt ein erstes, rotationssymetrisches Schmieröl-Leitblech 34 und ein die Trommel dicht abschließende Kappe 36, welche den Abscheideraum 38 begrenzt.

In der Achse 24, dem Nabenteil 32 und dem Leitblech 34 sind Durchbrüche 40,42,44 vorgesehen, durch die hindurch das Schmieröl wie mit den dick eingezeichneten Pfeilen angezeigt von der Druckseite 20 zum Ablauf 22 strömen kann.

Das Schmieröl durchströmt dabei zunächst den Abscheideraum 38 und gelangt dann in den unterhalb des Leitbleches 34 liegenden Bereich 46 der Trommel 14, in dem wie dargestellt mehrere Reaktionsdüsen 48 zum Antrieb der Trommel 14 nach dem Freistrahlprinzip angeordnet sind. Von den Reaktionsdüsen 48 fließt das abgestrahlte Schmieröl zum Ablauf 22.

Die Reaktionsdüsen 48 (vgl. Fig. 2) sind zu ihrer Drehebene 50 µm einen Winkel α auf der Zeichnung nach unten geneigt, wodurch sich bei der Abstrahlung des Schmieröls auf Grund des Rückstoßprinzips eine Kraftkomponente F (Pfeil 52) in axialer Richtung auf die Trommel 14 wirkend ergibt.

Die Trommel 14 ist auf der Achse 24 der Zentrifuge 8 über die Lagerbüchsen 28,30 drehbar gelagert, wobei zwischen der oberen Lagerbüchse 30 und der Anlauffläche 54 der Befestigungsschraube 18 ein axialer Spalt s vorgesehen ist (Fig. 1).

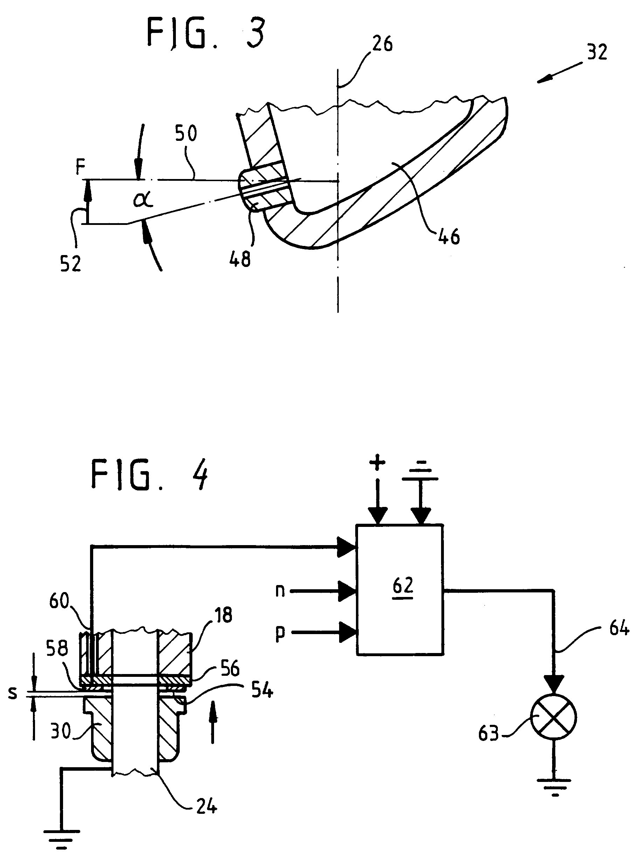

Wie der Fig. 3 entnehmbar ist, ist an der Befestigungsschraube 18 an deren unteren Stirnseite eine Isolierscheibe 56 befestigt (z. B. angeklebt), die einen metallischen Kontaktring 58 trägt, der die Anlauffläche 54 bildet. Der Kontaktring 58 ist über eine in der Befestigungsschraube 18 isoliert verlaufende elektrische Leitung 60 mit einem Steuergerät 62 verbunden.

Das Steuergerät 62 bildet mit an sich bekannten elektronischen Bauteilen eine logische Verknüpfungsschaltung, wobei als weitere Eingänge die Drehzahl n der Brennkraftmaschine und der Druck P des Druckumlauf-Schmierölsystems der Brennkrafmaschine vorgesehen sind. Über eine Ausgangsleitung 64 wird eine Warnleuchte 63 angesteuert.

Die Achse 24 der Zentrifuge 8 liegt an Minuspotential der nicht näher dargestellten Elektrik. Wird bei in Betrieb befindlicher Brennkraftmaschine bei ausreichendem Schmieröldruck die Trommel 14 über die Reaktionsdüsen 48 angetrieben, so wird auf Grund der Kraftkomponente F in axialer Richtung die Trommel 14 angehoben, wobei die Lagerbüchse 30 mit ihrer axialen Anlauffläche sich unter Überwindung des Spaltes s an die Anlauffläche 54 des Kontaktringes 58 anlegt und somit Minuspotential an die im übrigen isolierte Leitung 60 anlegt. Nimmt die Drehzahl der Trommel 14 auf Grund sinkenden Öldrucks wieder ab, so wird die Trommel auf Grund deren Gewichtskraft axial nach unten bewegt und das Minussignal wieder unterbrochen.

Das Steuergerät 62 ist derart ausgelegt, daß es bei unterhalb einer definierten Drehzahl n der Brennkraftmaschine und unterhalb eines definierten Schmieröldruckes P der Brennkraftmaschine kein Warnsignal an die Warnleuchte 63 über die elektrische Leitung 64 abgibt. Liegt oberhalb dieser definierten Drehzahl n bzw. oberhalb der definierten Druckschwelle P ein Minussignal über die Leitung 60 vor, so detektiert das Steuergerät 62 einen ordnungsgemäßen Betrieb. Liegt in diesem angegebenen Drehzahl- bzw. Druckbereich kein Minussignal vor, so wird die Warnleuchte 63 angesteuert und zeigt damit an, daß aufgrund einer nicht ausreichenden Drehzahl der Trommel 14 in der Zentrifuge 10 keine ordnungsgemäße Reinigung des Schmieröles erfolgt.

Das Steuergerät 62 kann in an sich bekannter Weise mit einem Fehlerspeicher versehen sein, um eine derartige kurzzeitige oder häufiger auftretende Funktionsstörung definiert anzuzeigen. Es kann ggf. mit einem ohnehin vorhandenen Steuergerät zur Überwachung eines ausreichenden Öldruckes der Brennkraftmaschine kombiniert sein.

Durch die beschriebene Überwachungsschaltung kann einerseits eine Fehlfunktion der Zentrifuge 8 erfaßt werden, es kann aber auch durch eine geeignete, ggf. empirisch zur ermittelnde Auslegung der Reaktionsdüsen zusätzlich erfaßt werden, ob der Verschmutzungsgrad der Zentrifuge bzw. deren drehbarer Trommel 14 einen definierten Wert erreicht hat (deren Gewicht nimmt dadurch zu, so daß die axiale Kraftkomponente durch die Reaktionsdüsen 48 ggf. nicht mehr ausreichend ist).

Die Erfindung ist nicht auf das dargestellte Ausführungsbeispiel beschränkt. So könnte anstelle des beschriebenen Siebfilters 6 auch ein Spaltfilter oder ein Sinterfilter zur Abscheidung grober Schmutzpartikel verwendet sein, obwohl diese Filter hinsichtlich des Bauraumes und der Kosten nicht so günstig wie das Siebfilter sind. In an sich bekannter Weise könnte neben oder anstelle der beschriebenen Überdruckventiles 13,15 auch noch ein die Pumpe 2 und/oder das Siebfilter 6 kurzschließendes Überdruckventil 17,19 (gestrichelt dargestellt) verwendet sein.

Anstelle einer Freistrahlzentrifuge könnte auch eine mechanisch von der Brennkraftmaschine oder eine elektrisch angetriebene Zentrifuge verwendet sein.

## Patentansprüche

1. Schmierölkreislauf einer Brennkraftmaschine, mit einer aus einem Sumpf fördernden Pumpe, die ein Schmierstellen versorgendes Hauptstromsystem und ein Nebenstromsystem mit unter Druck stehendem Schmieröl versorgt, wobei im Hauptstrom und im Nebenstrom ein Schmierölfilter vorgesehen ist, gekennzeichnet durch die Kombination einer Zentrifuge (8) als Schmierölreiniger im Nebenstrom und eines Spalt-, Sinter- oder Siebfilters (6) im Hauptstrom.

2. Schmierölkreislauf nach Anspruch 1, dadurch gekennzeichnet, daß im Hauptstrom ein Siebfilter (6) angeordnet ist.

3. Schmierölkreislauf nach den Ansprüchen 1 und 2, dadurch gekennzeichnet, daß der Siebfilter (6) eine Maschenweite von 20 - 40 µm aufweist.

4. Schmierölkreislauf nach einem oder mehreren der Ansprüche 1 - 3, dadurch gekennzeichnet, daß der Siebfilter (6) dem Haupt- und Nebenstrom vorgeschaltet ist.

5. Schmierölkreislauf nach den Ansprüchen 1 - 4, mit einem Überdruckventil im Hauptstrom, dadurch gekennzeichnet, daß das Überdruckventil (13) stromab des Siebfilters (6) liegt.

6. Schmierölkreislauf nach einem oder mehreren der Ansprüche 1 - 5, dadurch gekennzeichnet, daß der Antrieb der Zentrifuge (8) durch Reaktionsdüsen (48) nach dem Rückstoßprinzip erfolgt.

7. Schmierölkreislauf nach Anspruch 6, dadurch gekennzeichnet, daß in den Nebenstrom (7) stromauf der Zentrifuge (8) ein weiteres, bei einer niedrigeren Druckschwelle öffnendes Überdruckventil (15) eingeschaltet ist.

8. Schmierölkreislauf nach Anspruch 6, dadurch gekennzeichnet, daß die Reaktionsdüsen (48) derart schräg angestellt sind, daß sie eine axiale Kraftkomponente an der Trommel (14) bewirken und daß diese Kraftkomponente (F) zu einer Funktionsüberwachung genutzt wird.

9. Schmierölkreislauf nach den Ansprüchen 6 und 8, dadurch gekennzeichnet, daß die Trommel (14) axial verschiebbar gelagert und in der Ruhestellung durch Gewichts- und/oder Federkraft in einer der Kraftkomponente entgegengerichteten Axialstellung gehalten ist und daß eine Verschiebung der Trommel (14) in die andere Axialstellung elektrisch erfaßt ist.

10. Schmierölkreislauf nach Anspruch 9, dadurch gekennzeichnet, daß durch die Verschiebung der Trommel (14) ein elektrischer Kontakt (58) für einen Überwachungsstromkreis (62) betätigt wird.

11. Schmierölkreislauf nach den Ansprüchen 8 - 10, dadurch gekennzeichnet, daß die Überwachung der Funktion nur über einen definierten Drehzahlbereich n der Brennkraftmaschine und/oder einen definierten Schmieröl-Druckbereich P durchgeführt wird.

12. Schmierölkreislauf nach den Ansprüchen 8 - 11, dadurch gekennzeichnet, daß in einem Bauteil (18) der Zentrifuge (8) im Bereich der Drehlagerung (28,30) der Trommel (14) ein Kontaktteil (58) elektrisch isoliert angeordnet ist, welches mit einer metallischen Lagerbuchse (30) der Trommel (14) kontaktiert.

13. Schmierölkreislauf nach Anspruch 12, dadurch gekennzeichnet, daß das Bauteil der Zentrifuge (8) eine den äußeren Deckel (16) haltende Befestigungsschraube (18) ist.
